# FASCICULE DE BREVET EUROPEEN

(11) **EP 0 924 336 B1**
(45) Date de publication et mention de la délivrance du brevet: **02.05.2003**
(21) Numéro de dépôt: 98403138.5
(22) Date de dépôt: 14.12.1998
(51) Int. Cl.: D21C 5/02, D21B 1/32

(54) **Procédé de désencrage de la pâte à papier provenant de papiers recyclés**
Verfahren zum deinken einer aus Altpapier hergewonnenen Fasersuspension
Process for deinking pulp from waste paper

(30) Priorité: 15.12.1997 FR 9715839
(43) Date de publication de la demande: 23.06.1999
(73) Titulaire: Kadant Lamort, F-51300 Vitry le François (FR)
(72) Inventeur: Serres, Alain, 51100 Reims (FR)
(74) Mandataire: Loyer, Bertrand

(56) Documents cités:
- EP-A- 0 798 416
- FR-A- 2 347 984
- FR-A- 2 717 192
- US-A- 4 288 319

## Description

La présente invention a pour objet un procédé de désencrage de la pâte à papier provenant de vieux papiers.

Dans le processus de recyclage des vieux papiers on commence par déliter par brassage dans l'eau, les balles de vieux papiers afin d'obtenir une pâte. Cette pâte est ensuite épurée de façon à la débarrasser des corps étrangers, appelés contaminants, tels que agrafes, trombones, ainsi que des éléments en matière plastique.

Cette pâte ainsi débarrassée des corps étrangers grossiers comporte alors 3 types de composants :
- les fibres : c'est la partie non minérale retenue sur un tamis de 100 mesh;
- les fines : c'est le complément aux fibres de la partie non minérale.
- les charges : c'est la partie minérale qui reste après passage de la pâte au four à 470%.

Les charges proviennent, d'une part des particules minérales assez grosses, en général de couleur blanche que l'on ajoute au papier lors de sa fabrication pour lui donner de l'opacité et de la blancheur, d'autre part de la couche des papiers couchés. La couche contient en plus des particules minérales, des liants qui sont des produits analogues à des colles et de nombreux autres constituants mais en très faible proportion. Parmi les charges utilisées on peut citer, à titre d'exemple le carbonate (craie); par liants on entend des produits analogues à des colles.

On est amené à raffiner les fibres pour développer certaines caractéristiques physiques du papier produit. Cette opération produit en outre des éléments fins qui sont des fragments de fibres et qui ne sont pas retenus par la grille des 100 mesh.

Les fines sont donc constituées de fragments de fibres, de la fraction non minérale de la couche des papiers couchés, de la partie organique de l'encre et enfin de la partie organique des petits contaminants qui passent à travers le tamis de 100 mesh.

Bien évidemment dans les balles de vieux papiers recyclés on trouve toutes les sortes possibles et imaginables de papier allant des cartons jusqu'aux papiers pelures, ces papiers pouvant être couchés ou non, et comportent toutes sortes de contaminants.

A cela s'ajoutent les encres d'imprimerie.

L'étape suivante du traitement est le désencrage qui s'opère en général en injectant de l'air dans la pâte afin de créer des bulles d'air aux parois desquelles les particules d'encre viennent se fixer. Par cette opération d'aération on fait apparaître à la surface de la masse de pâte à papier une mousse constituée de bulles dont les parois retiennent des particules d'encre, mousse qui est évacuée.

Dans la demande de brevet français 94-02886 du 11 mars 1993 on a décrit un procédé de désencrage au moyen de bulles d'air consistant à créer dans une enceinte, par recyclages successifs de la pâte d'étage en étage du haut vers le bas de l'enceinte, un mouvement de descente par palier de la masse de pâte, ce mouvement étant croisé par un mouvement ascendant de bulles de sorte qu'à chaque palier (ou chaque niveau de recyclage) le courant de pâte soit traversé par un courant de bulles pratiquement perpendiculaire au courant de pâte.

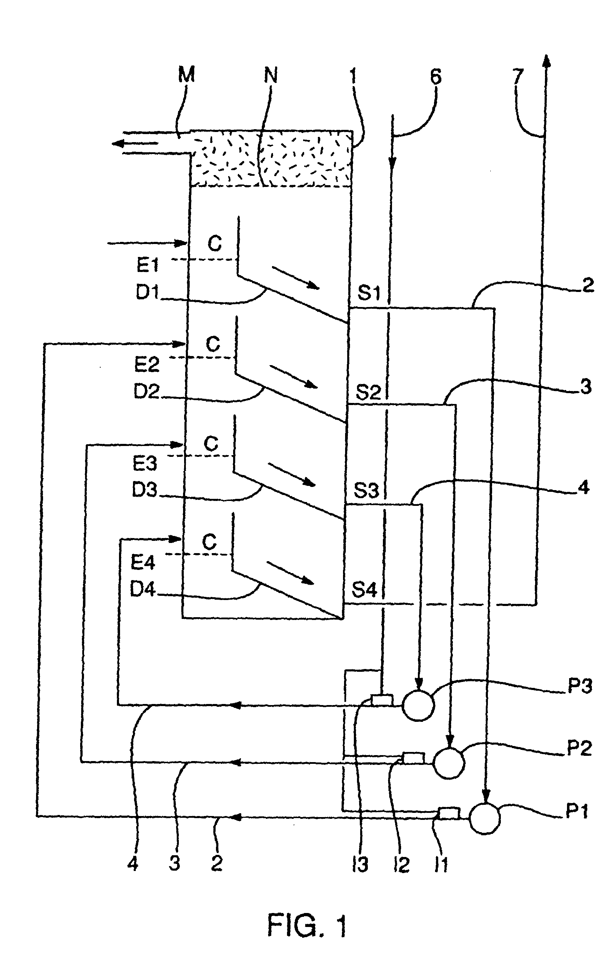

En se reportant à la figure 1 on voit que l'appareil est constitué par une enceinte 1, disposée verticalement comportant depuis le haut vers le bas quatre orifices d'entrée E portant les références E₁, E₂, E₃, E₄ ainsi que quatre orifices de sortie S référencés S₁, S₂, S₃ et S₄. Ces orifices étant situés à la base de quatre déflecteurs D1, D2, D3, D4 comportant une partie verticale et une partie inclinée.

L'orifice d'entrée E₁ qui est au niveau le plus élevé est celui par lequel arrive la pâte qui doit être désencrée.

A chaque orifice d'entrée tel que E₁ par exemple, correspond un orifice de sortie S₁ de sorte que la majeure partie (voire même la totalité) du flux arrivant dans l'enceinte en E₁ en ressorte en S₁. La sortie S₁ est reliée à l'entrée E₂ qui est située en-dessous du niveau de l'orifice E₁ afin que le produit, qui est ainsi recyclé, le soit à un niveau inférieur.

Dans l'exemple représenté les orifices de sortie S₁, S₂, S₃, S₄ sont situés à un niveau inférieur à celui de l'orifice d'entrée E₁, E₂, E₃, E₄ auxquels ils correspondent, mais cela n'est pas impératif.

Dans cet exemple, le deuxième orifice d'entrée E₂ est disposé légèrement plus bas que le premier orifice de sortie S₁ ; le troisième orifice d'entrée E₃ est disposé légèrement plus bas que le deuxième orifice de sortie S₂; le quatrième orifice d'entrée E₄ est disposé légèrement plus bas que le troisième orifice de sortie S₃; le quatrième orifice de sortie S₄ est situé à la partie basse de l'enceinte 1.

L'orifice S₄ est celui par lequel la pâte, débarrassée de son encre, est évacuée.

A sa partie supérieure l'enceinte 1 comporte un ou plusieurs orifices M destiné à l'évacuation de la mousse.

L'orifice de sortie S₁ est relié à l'orifice d'entrée E₂ au moyen d'une canalisation 2 sur laquelle est disposée une pompe P₁. De façon analogue l'orifice de sortie S₂ est relié par une canalisation 3 à l'orifice E₃ avec interposition d'une pompe P₂ et l'orifice S₃ à l'orifice E₄ avec une pompe P₃.

La pâte est amenée par E₁ (par tout moyen approprié) dans l'enceinte 1 qui est remplie jusqu'au niveau N qui est situé au-dessus de l'orifice E₁ et en-dessous de la canalisation M d'évacuation de la mousse.

Lorsque le niveau est atteint les pompes de recyclage P₁, P₂ et P₃ sont mises en action.

La pâte arrivant par E₁ est évacuée en tout ou partie par l'orifice S₁, la canalisation 2 permet de réintroduire la pâte dans l'enceinte par l'orifice E₂.

La pâte réintroduite en E₂ est évacuée, en tout ou partie, par l'orifice S₂ et réintroduite en E₃; puis de E₃ elle sort par S₃ pour être réintroduite en E₄ ; et de E₄ elle va jusqu'à la sortie S₄ où elle est évacuée par la canalisation 7.

De préférence, à la pompe P₃ qui est celle par laquelle la pâte est recyclée au point le plus bas de l'enceinte 1, est associé un injecteur d'air I₃ alimenté par une conduite d'air 6. Il en résulte que le flux de pâte qui arrive en E₄, qui est l'orifice d'entrée le plus bas de l'enceinte, est chargé de bulles d'air. Ces bulles d'air vont remonter de sorte que la pâte recyclée en S₃, S₂ et S₁ est remélangée aux bulles et donc que les bulles qui finissent par arriver au niveau M ont été mélangées à la pâte, ont été agitées dans la pâte à plusieurs reprises et que les probabilités de collisions entre elles et les particules d'encre ont été augmentées.

On peut disposer des injecteurs d'air supplémentaires I₂ et I₁ en association avec les pompes P₂ et P₁, ce qui augmente la quantité de bulles qui remontent à travers la masse de pâte qui descend.

Dans l'exemple représenté il y a trois circuits de recyclage S₁-E₂, S₂-E₃, S₃-E₄ mais il est bien évident que l'invention n'est pas limitée à ce cas particulier.

Grâce à ce procédé on obtient une pâte très pure, pratiquement totalement désencrée.

Mais on s'est aperçu qu'il y avait beaucoup de charges, de fines et de fibres de petites dimensions qui se retrouvaient dans la mousse, soit parce que ces particules sont entraînées mécaniquement par les bulles, soit parce qu'elles sont collées aux bulles par l'encre.

Selon l'invention on remédie partiellement à cet inconvénient par un lavage à contre courant des bulles avec de l'eau.

On connaît du document EP 0 798 416 un procédé et une installation du genre décrit dans le FR 94.02886 et qui permet le lavage des bulles avec de l'eau. Cependant, selon ce procédé, les bulles individuelles ne sont pas lavées avant la formation de la mousse, mais dans la mousse déjà formée sur la surface de la pâte. Cela est obtenu par des pulvérisateurs disposés au-dessus de la mousse ou latéralement par rapport à celle-ci ou bien à l'intérieur de la mousse. Ces pulvérisateurs doivent produire des gouttelettes bien calibrées présentant une dimension très réduite, et elles doivent en plus être projetées vers la surface de la mousse à une vitesse prédéterminée pour ne pas faire éclater les bulles contenues dans la mousse. Cette installation est ainsi relativement compliquée et sensible, chère à fabriquer et nécessite un travail d'entretien continu, ainsi que des dispositifs surveillant et compensant les fluctuations de la pression d'eau dans le réseau d'alimentation.

La présente invention concerne donc un procédé de désencrage de la pâte à papier provenant de la mise en pulpe avec de l'eau de vieux papiers de qualités diverses selon lequel on fait traverser au moins une fois le flux (E₂ S₂ ; E₃ S₃) de pâte par un courant de bulles d'air (C) caractérisé par le fait qu'on envoie un contre-courant d'eau (E₁) dans le courant de bulles d'air de désencrage après que lesdites bulles aient traversé la pâte et se soient chargées de particules d'encre, de sorte que le contre-courant d'eau libère les particules (fibres, fines ou charges) entraînées par ces bulles de désencrage et les entraîne avec lui.

Il s'est avéré au cours des essais auxquels il a été procédé que l'on récupère surtout des fibres, la partie des fines provenant du raffinage des fibres et seulement très peu de charges. On entraîne que des quantités infimes de particules d'encre : les seules fibres non récupérées sont celles qui sont attachées aux bulles par des particules d'encre encore attachées à ces fibres.

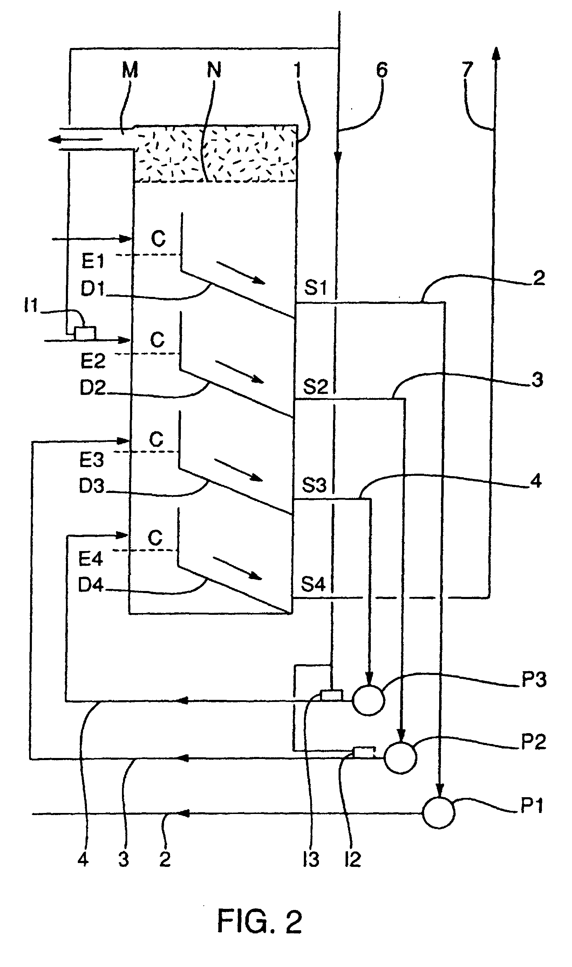

A titre d'exemple non limitatif on a représenté à la figure 2 une vue schématique d'un dispositif pour la mise en oeuvre du procédé selon la présente invention.

Selon la présente invention (à la figure 2) en utilisant la même cellule qu'à la figure 1 on a alimenté cette cellule en pâte en E₂ au lieu de E₁. On a envoyé de l'eau en E₁ à la place de la pâte. Une partie de cette eau est évacuée par la sortie S₁ et l'autre par la sortie S₂.

La partie qui est évacuée par la sortie S₁ est envoyée par la pompe P₁ vers le réservoir de pâte à désencrer pour la diluer. En effet, à la sortie des différents appareillages de filtration qui ont débarrassé la pâte de ses impuretés la concentration de celle-ci en matières sèches est de l'ordre de 2% à 3% ce qui est trop élevé pour obtenir un bon désencrage au moyen des bulles d'air. Il est nécessaire d'abaisser cette concentration en matières sèches à environ 1%-1.5%, ce qui est fait en ajoutant de l'eau : cette eau est fournie par la canalisation 2 alimentée par la pompe P₁. en eau provenant de la sortie S₁.

L'autre partie descend vers S₂ et constitue donc un contre-courant d'eau à travers les bulles provenant des niveaux inférieurs, ce contre-courant a pour effet de laver les bulles d'air en détachant les particules (fibres, fines ou charges) qui sont restées attachées auxdites bulles d'air et de les entraîner avec lui.

A la figure 2, la conduite 6 est une conduite d'arrivée d'air qui alimente les injecteurs d'air I₁, I₂ et I₃.

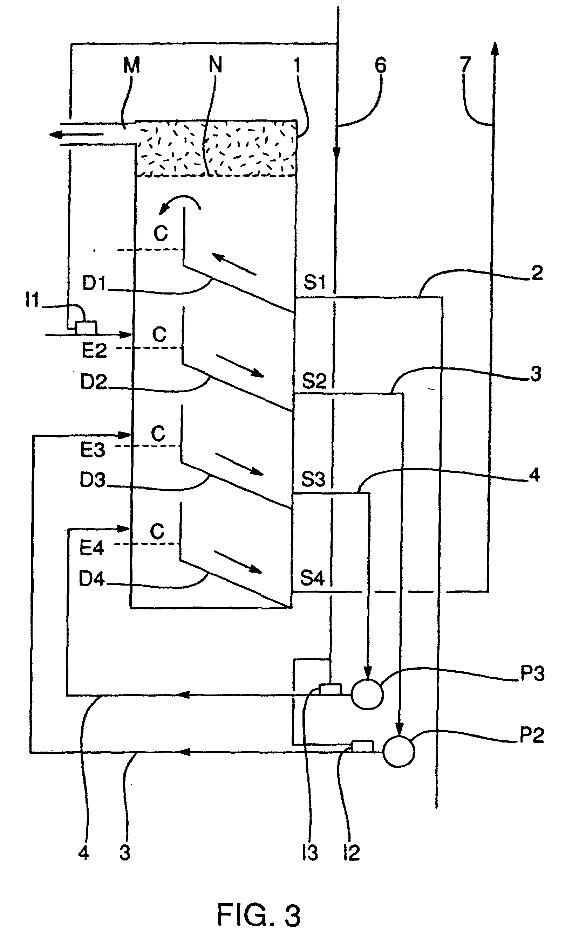

Une autre possibilité consiste, comme cela est représenté à la figure 3, d'envoyer l'eau de lavage des bulles à l'intérieur de l'enceinte par l'orifice S₁ et de ne pas utiliser l'orifice d'entrée E₁ : toute l'eau descend alors à contre-courant des bulles d'air vers S₂.

## Revendications

1. Procédé de désencrage de la pâte à papier provenant de la mise en pulpe avec de l'eau de vieux papiers de qualités diverses selon lequel on fait traverser, dans une enceinte (1), au moins une fois le flux (E₂ S₂ ; E₃ S₃) de pâte par un courant de bulles d'air (C), **caractérisé par le fait qu'**on envoie, par un orifice (E₁, S₁) situé en dessous du niveau de remplissage (N) de l'enceinte (1), un contre-courant d'eau (E₁) à travers les bulles provenant de niveaux inférieurs, dans le courant de bulles d'air de désencrage après que les lesdites bulles aient traversé la pâte et se soient chargées de particules d'encre de sorte que le contre-courant libère les particules (fibres, fines ou charges) entraînées par ces bulles de désencrage et les entraîne avec lui.

2. Procédé de désencrage selon la revendication 1, **caractérisé par le fait que** l'orifice d'entrée d'eau (E₁, S₁) est à un niveau plus élevé que l'orifice d'entrée de la pâte (E₂).

3. Procédé de désencrage selon la revendication 1 ou 2, **caractérisé par le fait qu'**une partie de l'eau est évacuée par une sortie (S₁) et envoyé par une pompe (P₁) vers le réservoir de pâte à désencrer pour la diluer, l'autre partie de l'eau étant évacuée par une autre sortie (S₂) et constitue ledit contre-courant d'eau.

4. Procédé de désencrage selon la revendication 3, **caractérisé par le fait que** la concentration en matières sèches de la pâte sortant de différents appareillages de filtration est abaissée en y ajoutant de l'eau, et que cette eau est fournie par une canalisation (2) alimenté par ladite pompe (P₁).

## Claims

1. Method for de-inking pulp coming from pulping waste paper of different qualities with water, according to which the flow (E₂, S₂; E₃, S₃) of pulp, in a chamber (1), is passed through at least once by a current of air bubbles (C), **characterised in that** a counter-current of water (E₁) is directed through an orifice (E₁, S₁) which is situated below the fill-up level (N) of the chamber (1), through the air bubbles coming from lower levels, into the current of de-inking air bubbles after said bubbles have passed through the pulp and are charged with ink particles such that the counter-current frees the particles (fibres, fines or fillers) which are entrained by these de-inking bubbles and entrains them with said counter-current.

2. Method for de-inking according to claim 1, **characterised in that** the water inlet orifice (E₁, S₁) is at a level which is higher than the pulp inlet orifice (E₂).

3. Method for de-inking according to claim 1 or 2, **characterised in that** one part of the water is removed through an outlet (S₁) and directed by a pump (P₁) towards the reservoir of pulp which is to be de-inked in order to dilute said pulp, the other part of the water being removed through another outlet (S₂) and comprising said counter-current of water.

4. Method for de-inking according to claim 3, **characterised in that** the concentration of dry matter of the pulp leaving various filtration installations is lowered by adding water to it and **in that** this water is provided by a pipe (2) supplied by said pump (P₁).

## Patentansprüche

1. Verfahren zum Deinken von Papierbrei, der aus der Bildung eines Breis von Altpapier unterschiedlicher Qualitäten mit Wasser stammt, bei dem man den Breistrom (E₂ S₂; E₃, S₃) mindestens einmal in einem Raum (1) von einem Luftblasenstrom (C) durchsetzen läßt, **dadurch gekennzeichnet, daß** man durch eine unterhalb des Füllniveaus (N) des Raumes (1) gelegene Öffnung (E₁, S₁) einen Wasser-Gegenstrom (E₁) durch die von niedrigeren Niveaus stammenden Blasen im Luftblasenstrom zum Deinken leitet, nachdem diese Blasen durch den Brei geströmt sind und sich mit Tintenteilchen beladen haben, so daß der Gegenstrom die von diesen Deinking-Blasen mitgerissenen Teilchen (Fasern, Schlamm oder Füllstoffe) freisetzt und mit sich fortführt.

2. Deinking-Verfahren nach Anspruch 1, **dadurch gekennzeichnet, daß** die Wassereinlaßöffnung (E₁, S₁) sich auf einem höheren Niveau befindet als die Breieinlaßöffnung (E₂).

3. Deinking-Verfahren nach Anspruch 1 oder 2, **dadurch gekennzeichnet, daß** ein Teil des Wassers über einen Auslaß (S₁) abgezogen und von einer Pumpe (P₁) dem Reservoir an zu deinkendem Brei zugeführt wird, um diesen zu verdünnen, während der andere Teil des Wassers über einen anderen Ausiaß (S₂) abgezogen wird und den Wasser-Gegenstrom bildet.

4. Deinking-Verfahren nach Anspruch 3, **dadurch gekennzeichnet, daß** die Konzentration des aus verschiedenen Filtriervorrichtungen stammenden Breis an Trockensubstanzen durch Zugabe von Wasser gesenkt wird, und daß dieses Wasser über von der Pumpe (P₁) gespeiste Leitungen (2) zugeführt wird.
